Europäisches Patentamt

European Patent Office

Office européen des brevets

(11) Publication number: **0 225 697**
**A2**

## EUROPEAN PATENT APPLICATION

(21) Application number: 86307797.0

(51) Int. Cl.⁴: **H04N 1/40**

(22) Date of filing: 09.10.86

The title of the invention has been amended (Guidelines for Examination in the EPO, A-III, 7.3).

(30) Priority: **15.10.85 JP 229402/85**

(43) Date of publication of application:
**16.06.87 Bulletin 87/25**

(84) Designated Contracting States:
**DE FR GB**

(71) Applicant: **SEIKO INSTRUMENTS & ELECTRONICS LTD.**
**31-1, Kameido 6-chome**
**Koto-ku Tokyo 136(JP)**

(72) Inventor: **Nonaka, Kei c/o Seiko Instruments & Electronics Ltd. 31-1, Kameido 6-chome Koto-ku Tokyo(JP)**
Inventor: **Tanigaki, Yasushi c/o Seiko Instruments & Electronics Ltd. 31-1, Kameido 6-chome Koto-ku Tokyo(JP)**
Inventor: **Yokosuka, Kouichi c/o Seiko Instruments & Electronics Ltd. 31-1, Kameido 6-chome Koto-ku Tokyo(JP)**
Inventor: **Nureki, Shinji c/o Seiko Instruments & Electronics Ltd. 31-1, Kameido 6-chome Koto-ku Tokyo(JP)**

(74) Representative: **Caro, William Egerton et al J. MILLER & CO. Lincoln House 296-302 High Holborn London WC1V 7JH(GB)**

(54) **ELectric image printer.**

(57) An image printer comprises a printing head (2) having printing dots arranged in a line, print drive circuitry (7) for driving the printing dots grouped into a plurality of blocks, and a stepping motor (9) for feeding recording medium.

An area gradation circuit (1) selects a required number of dots in a picture element constituted by an m x n matrix wich consists of m dots in the line direction and n dots in the feed direction. A concentration gradation circuit (1) selects a repetition rate for printing selected dots.

FIG.1

## IMAGE PRINTER

This invention relates to image printers.

The present invention seeks to provide an image printer in which an area gradation system and a concentration gradation system are used in combination to achieve multi-gradation at high speeds maintaining good image reproducibility, and the difference of concentration between blocks is corrected. Moreover, the present invention seeks to provide an image printer which is capable of effecting a multi-gradation printing and which can be extensively used as a hard-copying device in fields such as computer graphics, video systems and facsimiles.

A conventional image printer that is capable of effecting multi-gradation printing uses either an area gradation system or a concentration gradation system.

A typical area gradation system is disclosed in U.S. Patent Specification No. 4,523,203. To increase the resolving power of an image in the conventional area gradation system, dot size of a line head must be reduced and dot matrices constituting picture elements must be increased. To this end it is necessary to employ a line head of high density, i.e. having an increased number of dots per unit length, resulting in a marked increase in manufacturing costs and mounting costs. Moreover, the paper must be fed with a precision comparable to that of dots, requiring sophisticated skill from the point of view of manufacture of a paper feed mechanism.

To increase the resolving power of an image in a concentration gradation system, on the other hand, the energy of print output must be controlled very precisely for each dot but this results in poor reproducibility. Moreover, for gradation the same dot must be produced a number of times making it difficult to produce dots at high speed.

Driving the line head by grouping the dots into blocks has the result that the print output energy of each block must be corrected depending upon the number of print output dots in each block. Otherwise, the print output energy given to an output dot varies and a difference develops in the concentration among the blocks. Moreover, if printing is effected repetitively with the same output energy according to the concentration gradation system, the gradation deviates from a proper concentration curve for the human eye.

According to the present invention there is provided an image printer characterised by comprising: a printing head having a plurality of printing dots arranged in line; a print drive circuit for driving the printing dots grouped into a plurality of blocks; a stepping motor for feeding recording medium; an area gradation means for selecting a required number of dots in a picture element constituted by an $m \times n$ matrix which consists of m dots in the line direction and n dots in the feed direction; and a concentration gradation means for selecting a repetition rate of printing selected dots.

Preferably said print drive circuit is arranged to correct print output energy of each block depending upon the number of output dots of each block.

The arrangement may be such that, in operation, output energy levels during said selected repetition are different from one another.

As for concentration difference of an output dot that stems from the difference of the number of output dots of the individual blocks, means may be provided to set a reference energy of a block in advance, and then to correct the reference energy to meet the number of output dots. Means may be provided to correct the print output energy of each repetition, so that the concentration gradation is brought into agreement with a suitable concentration curve after repetition $l$ times.

The gradation is realised in an increased number maintaining good reproducibility by using line heads of a relatively low dot density based upon the combination of the area gradation system and the concentration gradation system.

For instance, when 16 gradations are to be realised in each picture element having a size of $0.3 \text{ mm} \times 0.3 \text{ mm}$ based upon the area gradation system only, the picture element must be constituted by a matrix of $4 \times 4$ dots since $4 \times 4 = 16$. Therefore, a dot of the line head must be formed with the size of $0.075 \text{ mm} \times 0.075 \text{ mm}$, requiring a very high precision from the point of view of production of the line head. Thus the cost of the line head becomes relatively high. Moreover, precision of a comparable degree is required for feeding the paper, and the cost of constructing a paper feed mechanism becomes very high also.

With the concentration gradation system only, on the other hand, the line head needs to have dots each measuring $0.3 \text{ mm} \times 0.3 \text{ mm}$, and the head can be constructed at lower cost. In this case, however, the print output must be produced a maximum of 16 times for each dot, and an extended period of time is required to produce the output 16 times. Moreover, to divide the output for a dot into 16 gradations ranging from one gradation up to saturation gradation involves difficulty with regard to controlling the output and with regard to reproducibility.

To realise the similar gradation in an image printer according to the present invention, for instance, a picture element is constituted by a dot matrix of 2 × 2 dots, and the area gradation of 2 × 2 and the concentration gradation of four stages per dot are effected to realise 16 gradations, i.e. 4 × 2 × 2 = 16. In this case, a dot on the line head measures 0.15 mm × 0.15 mm. Thus the line head can be manufactured relatively easily, and the paper feed mechanism needs to maintain a low feeding position and thus is advantageous from the standpoint of manufacture. Moreover, a print output to the dot needs to be repeated a maximum of 4 times. Since the picture element is constituted by a two-dot line, the repetition rate of print outputs per picture element is 8, i.e. 4 × 2 = 8, which is one-half the 16 times in the case where only the concentration gradation system is used. This saves time for transferring data and time for producing the print outputs. Moreover, since each dot has a relatively large area and decreased concentration steps, the relation maintains good reproducibility.

On the other hand, each block contains a plurality of dots. Therefore, if the number of outputs is not the same, energy is given in different amounts to the dots if the same amount of energy is given to the individual blocks. Because of this, the total energy given to the individual blocks must be so corrected that the amount of print output energy given to each dot is equal even when the number of output dots is not the same. According to an image printer according to the present invention, the output pulse width applied to the blocks is corrected depending upon the number of output dots, so that equal print output energy is given to the individual dots.

In the concentration gradation system, particularly, in a thermal line head, gradation deviates from a desired concentration curve due to thermal diffusion, storage of heat and area gradation as the print output is repetitively produced maintaining the same energy once, twice ... $l$ times. Therefore, the print output energy is changed for each repetition to obtain a gradation that meets the desired concentration curve.

The invention is illustrated, merely by way of example, in the accompanying drawings, in which:-

Figure 1 is a block diagram of an image printer according to the present invention;

Figure 2 is a diagram of gradation patterns produced by the image printer of Figure 1;

Figure 3 is a diagram of a picture element pattern produced by the image printer of Figure 1;

Figure 4 is a diagram of a picture element line pattern produced by the image printer of Figure 1;

Figure 5 is a flow chart of operation of the image printer of Figure 1 for producing gradations;

Figure 6 is a drive timing chart of the image printer of Figure 1;

Figures 7 and 8 are timing charts for correcting the width of output pulses of an image printer according to the present invention;

Figure 9 is a look-up table comparing the number of drive dots with pulse widths in an image printer according to the present invention; and

Figure 10 is a flow chart for controlling pulse widths in an image printer according to the present invention.

In the following description, each picture element is constituted by a matrix of 2 × 2 dots to realise 16 gradations. The same, however, also holds true for other gradations such as 32 gradations, 64 gradations, etc.

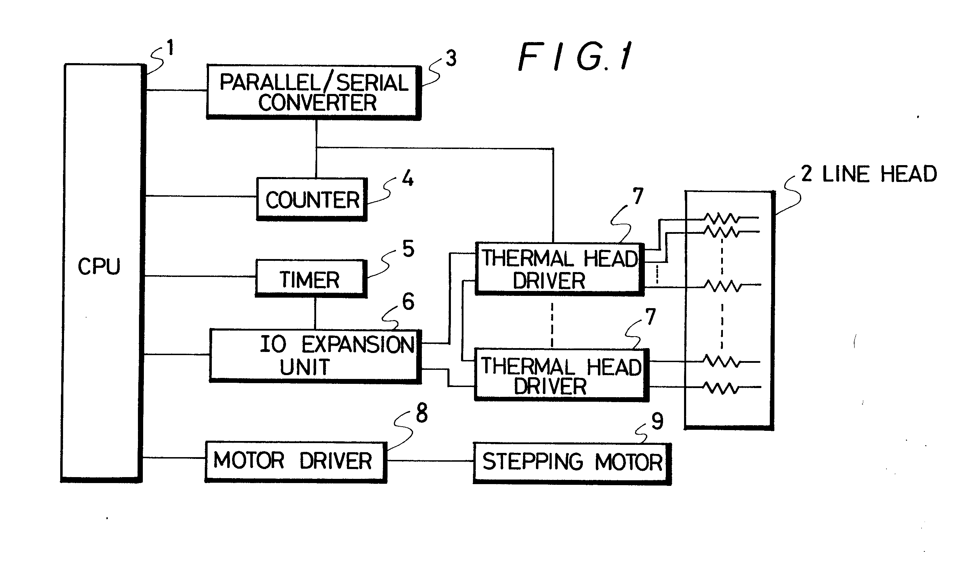

Figure 1 is a block diagram of one embodiment of an image printer according to the present invention. A thermal line head 2 has 640 dots grouped into five blocks so that each block contains 128 dots. It will be appreciated that other combinations are possible. A parallel/serial converter 2 converts parallel data into serial data. The image printer has a counter 4, a timer 5, an IO expansion unit 6 and thermal head drivers 7, twenty of which are required in total for the line head 2. The thermal head drivers are grouped into five blocks and each driver drives 32 dots. A motor driver 8 drives a stepping motor 9. A CPU 1 prepares output data and drives and controls the image printer. Output data from the CPU 1 passes through the parallel/serial converter 3 and is stored in a register of the head drivers 7. The timer 5 controls the output pulse width of the head drivers. The IO expansion unit 6 selects the head drivers for each block. The print output of each dot of the line head 2 is produced when corresponding dot data is 1 as the head drivers 7 are turned on by a pulse width that is controlled by the timer 5.

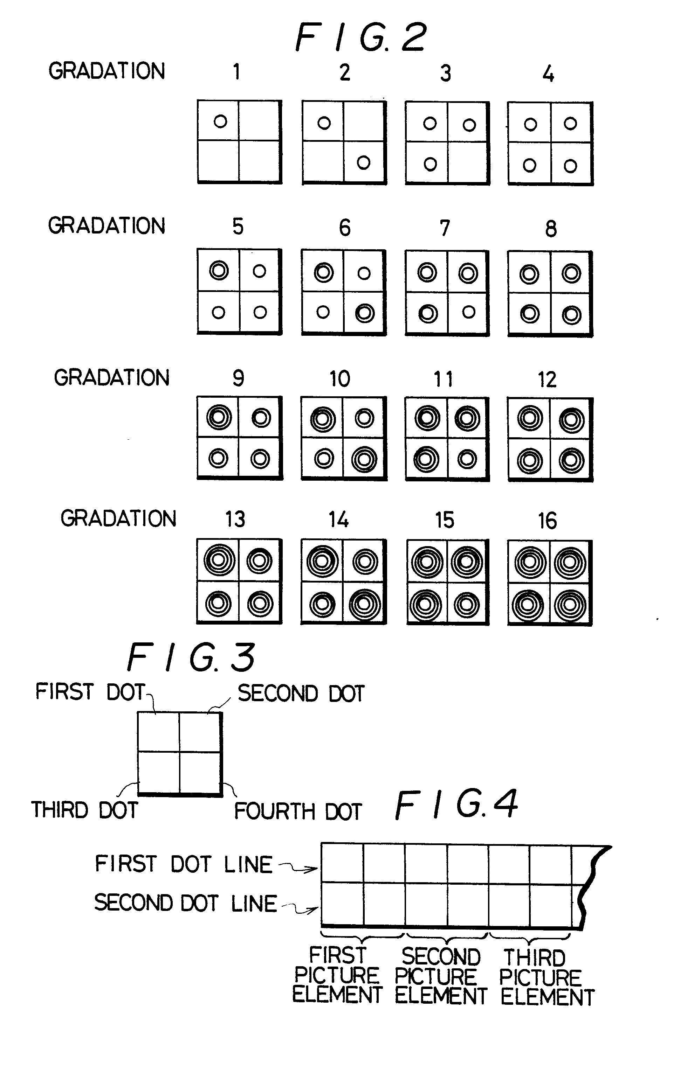

Figure 2 is a diagram of gradation patterns produced by the image printer of Figure 1. A single circle represents the print output of one time, a double circle represents the print output of two times, a triple circle represents the print output of three times, and a quadruple circle represents the print output of four times. Therefore, the concentration 1 represents the case of the faintest print concentration and the concentration 16 represents the case of the densest print concentration.

Figure 3 is a diagram of a pattern of a print element for expressing the gradations of an image printer according to the present invention. A picture element is constituted by a matrix of 2 × 2 dots. A first dot, a second dot, a third dot and a fourth dot are determined as shown in Figure 3. Figure 4 is a diagram of a pattern of picture element lines. One picture element line is composed of a first dot line and a second dot line, and the first dot line proceeds to the second dot line being driven by a stepping motor 9.

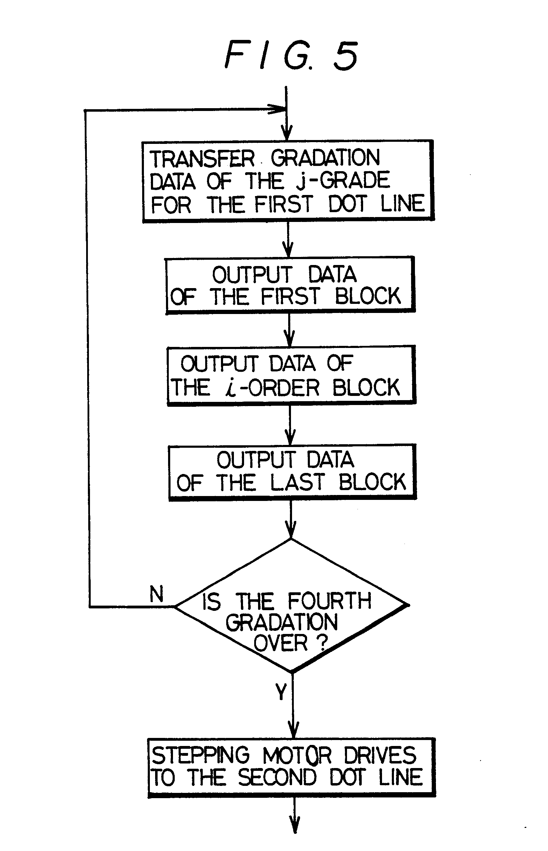

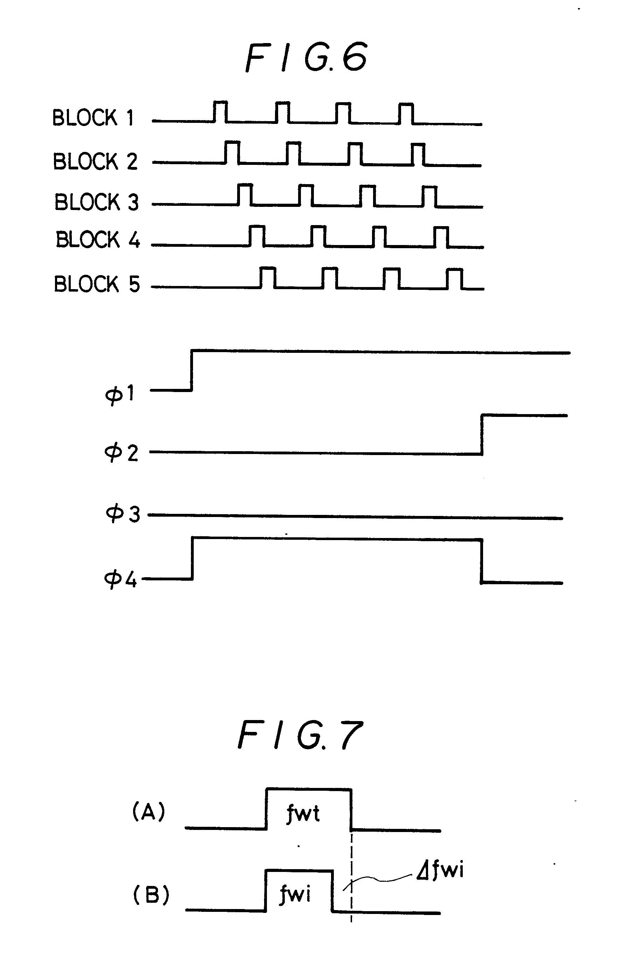

Figure 5 is a flow chart of procedure for producing gradation by an image printer according to the present invention, and Figure 6 is a drive timing chart illustrating the timing for driving the line head 2 and for driving the stepping motor 9. The method of realising the concentration gradation will now be described in conjunction with Figures 5 and 6. First, to produce the print output of the first dot line, the stepping mutor is driven by one step to feed the paper or other recording medium. The stepping motor has 2-2 phase excitation; i.e., phases $\phi1$ and $\phi4$ are high, and phases $\phi2$ and $\phi3$ are low. This condition is maintained until the production of the print output of one dot line is completed. While the stepping motor is maintained under the above-mentioned condition, the print output is produced for the individual dots. After outputs having the required pulse width are successively produced to the first block up to the fifth block of the line head, drive dots are then produced for each of the blocks. This operation is repeated four times, and the print output for the first dot line is completed. Then, the phases $\phi1$ and $\phi2$ of the stepping motor assume the high level and phases $\phi3$ and $\phi4$ of the motor assume the low level, whereby the stepping motor is driven by one step, and the paper is fed to a position of the second dot line. The print output of the second dot line is produced while this phase condition is being maintained. As in the case of the first dot line, the print output is successively produced for each of the blocks. This operation is repeated four times. Thus the print output for one picture element line is realised.

In this case, the data for the dots are obtained as described below.

Namely, the input concentration data corresponding to the gradations 1 to 16 of a picture element are converted into $2 \times 2$ area gradations and into repetition data of four times in accordance with the gradation patterns of Figure 2, and are stored in a memory. The data is rearranged for 640 dots for each of the dot lines.

Thus, 16 gradation outputs for a picture element line are obtained. This operation is repeated a number of times to meet the required number of picture element lines.

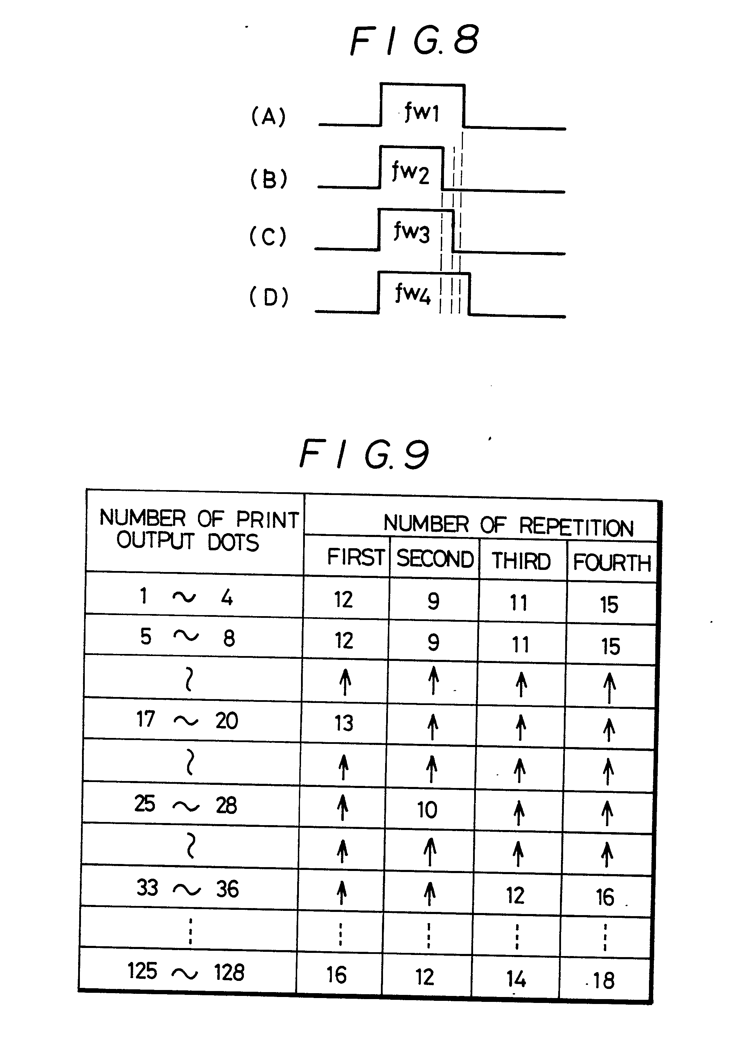

With this fundamental gradation system only, however, it is difficult to produce the gradation output that meets a concentration curve of the human eye maintaining good reproducibility. This is because, though each block contains 128 dots, the number of print output dots may be 10 in a block depending upon the data, or the number of print output dots may be 80 in a block, or the number of print output dots may be 128 in a block. Therefore, if the same energy (corresponding to the output pulse width) is applied to each of the blocks, individual dots receive energy of different levels to develop differences in the concentration since the number of output dots is not the same in each block. Therefore, the difference of concentration that stems from the above difference must be corrected. Figure 7 is a timing chart when the pulse width of print output is corrected depending upon the number of dots of print output in a block. If the output pulse width is fwt in the case where all dots are produced in a block, then the difference $\Delta fwi$ of pulse width must be corrected, where fwi denotes the output pulse width in the case where i dots, that is less than the total number of dots, are produced.

When the gradation is corrected by not only correcting the number of output dots in a block but also effecting the concentration gradation, the energy that is applied must also be corrected for each repetition operation. Initially, energy of a relatively large level is applied to preheat the head of the paper, and the output pulse has a large width. In the second and third times, the pulses has dissimilar widths since the concentration curve being sought is nonlinear. Namely, the pulses have widths narrower than that of the first time, and pulses of the second and third times have dissimilar widths, also. In the fourth time, the pulse must have a width broader than in any other time, so that a sufficiently large concentration is obtained on the black side. Figure 8 is a timing chart illustrating the correction of print output pulse width during repetition. The first pulse width is denoted by fw1, the second pulse width is denoted by fw2, the third pulse width is denoted by fw3, and the fourth pulse width is denoted by fw4 and has the broadest width, the pulse fw1 having the next broadest width. The pulses fw2 and fw3 are widths narrower than the pulses fw1 and fw4, but are not equal to each other.

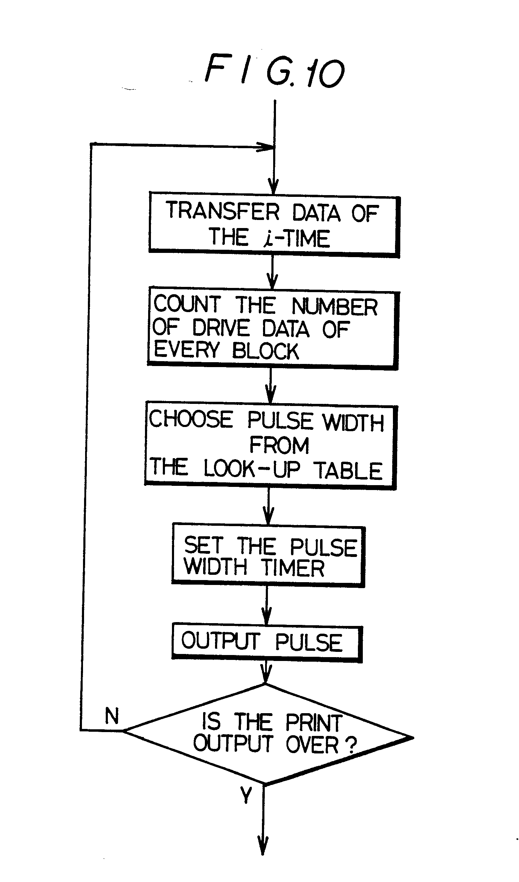

Figure 9 is a look-up table comparing the number of print output dots, the number of repetitions, and the pulse widths, and Figure 10 is a flow chart illustrating the procedure for controlling the output pulse width.

According to the present invention, the correction depending upon the number of dots and the correction depending upon the number of repetitions are stored in a program in the form of a look-up table as shown in Figure 9. The correction depending upon the number of drive dots is effected with four dots as a unit. In Figure 9, the numerals represent count numbers for controlling the timer 5. The larger the numeral, the greater the width of output pulse.

The output data is sent from the CPU 1 to the head drivers 7 via the parallel/serial converter 3. At this moment, the counter 4 counts the number of output dots for each of the blocks. The values are read by the CPU 1. Further, a corresponding value to limit the pulse width is taken from the look-up table of Figure 9 in compliance with the number of repetitions of the concentration gradation, and is set to the timer 5. In the IO expansion unit 6, on the other hand, data has been produced from the CPU 1 to select which block should be driven. Depending upon the on or off of the timer 5, therefore, the pulses having the required widths are sent to the dots via the corresponding head drivers 7.

The above process is effected for each dot line to produce the print output of a concentration curve that adapts to the human eye.

As described above, the gradation is expressed based upon the combination of the area gradation system and the concentration gradation system at high speed maintaining good reproducibility. Therefore, video output is obtained at high speed maintaining good gradation expression to meet the requirements of communication systems such as computer graphics and videotex.

**Claims**

1. An image printer characterised by comprising: a printing head (2) having a plurality of printing dots arranged in line, a print drive circuit (7) for driving the printing dots grouped into a plurality of blocks; a stepping motor (9) for feeding recording medium; an area gradation means (1) for selecting a required number of dots in a picture element constituted by an m $^x$ n matrix which consists of m dots in the line direction and n dots in the feed direction, and a concentration gradation means (1) for selecting a repetition rate of printing selected dots.

2. An image printer as claimed in claim 1 characterised in that said print drive circuit (7) is arranged to correct print output energy of each block depending upon the number of output dots of each block.

3. An image printer as claimed in claim 1 or 2 characterised in that the arrangement is such that, in operation, output energy levels during said selected repetition are different from one another.

4. An image printer comprising, a printing heads having a plurality of printing dots stood in line; a print drive circuit which drives said printing heads by grouping them into a plurality of blocks; a step motor for feeding a paper; an area gradation means selecting a required number of dots in a picture element constituted by an m $^x$ n matrix

which consists of m dots in the line direction and n dots in the feed direction; and a concentration gradation means for selecting a repetition times of printing a selected dots.

FIG.1

0 225 697

# F I G. 2

| GRADATION | 1 | 2 | 3 | 4 |
|---|---|---|---|---|

| GRADATION | 5 | 6 | 7 | 8 |
|---|---|---|---|---|

| GRADATION | 9 | 10 | 11 | 12 |
|---|---|---|---|---|

| GRADATION | 13 | 14 | 15 | 16 |
|---|---|---|---|---|

# F I G. 3

FIRST DOT    SECOND DOT

THIRD DOT    FOURTH DOT

# F I G. 4

FIRST DOT LINE

SECOND DOT LINE

FIRST PICTURE ELEMENT    SECOND PICTURE ELEMENT    THIRD PICTURE ELEMENT

# F I G. 5

```
┌─────────────────────────┐
│ TRANSFER GRADATION      │
│ DATA OF THE j-GRADE     │
│ FOR THE FIRST DOT LINE  │
└─────────────────────────┘
            │
            ▼
┌─────────────────────────┐
│      OUTPUT DATA        │
│  OF THE FIRST BLOCK     │
└─────────────────────────┘
            │
            ▼
┌─────────────────────────┐
│    OUTPUT DATA OF       │
│  THE i-ORDER BLOCK      │
└─────────────────────────┘
            │
            ▼
┌─────────────────────────┐
│      OUTPUT DATA        │
│  OF THE LAST BLOCK      │
└─────────────────────────┘
            │
            ▼
        ◇ IS THE FOURTH
     N    GRADATION
          OVER ?
            │ Y
            ▼
┌─────────────────────────┐
│ STEPPING MOTOR DRIVES   │
│ TO THE SECOND DOT LINE  │
└─────────────────────────┘
            │
            ▼
```

## F I G. 6

## F I G. 7

# F I G.8

(A) fw1

(B) fw2

(C) fw3

(D) fw4

# F I G.9

| NUMBER OF PRINT OUTPUT DOTS | NUMBER OF REPETITION | | | |
|---|---|---|---|---|
| | FIRST | SECOND | THIRD | FOURTH |
| 1 ~ 4 | 12 | 9 | 11 | 15 |
| 5 ~ 8 | 12 | 9 | 11 | 15 |
| ⦚ | ↑ | ↑ | ↑ | ↑ |
| 17 ~ 20 | 13 | ↑ | ↑ | ↑ |
| ⦚ | ↑ | ↑ | ↑ | ↑ |
| 25 ~ 28 | ↑ | 10 | ↑ | ↑ |
| ⦚ | ↑ | ↑ | ↑ | ↑ |
| 33 ~ 36 | ↑ | ↑ | 12 | 16 |
| ⋮ | ⋮ | ⋮ | ⋮ | ⋮ |
| 125 ~ 128 | 16 | 12 | 14 | 18 |

# F I G. 10

```
┌─────────────────────┐
│ TRANSFER DATA OF    │
│ THE i-TIME          │
└─────────────────────┘
          │
          ▼
┌─────────────────────┐
│ COUNT THE NUMBER    │
│ OF DRIVE DATA OF    │
│ EVERY BLOCK         │
└─────────────────────┘
          │
          ▼
┌─────────────────────┐
│ CHOOSE PULSE WIDTH  │
│       FROM          │
│ THE LOOK-UP TABLE   │
└─────────────────────┘
          │
          ▼
┌─────────────────────┐
│ SET THE PULSE       │
│ WIDTH TIMER         │
└─────────────────────┘
          │
          ▼
┌─────────────────────┐
│ OUTPUT PULSE        │
└─────────────────────┘
          │
          ▼
      ╱────────╲
   N ╱ IS THE   ╲
 ◄───  PRINT     
     ╲ OUTPUT OVER?╱
      ╲────────╱
          │ Y
          ▼
```